# EUROPÄISCHE PATENTANMELDUNG

(11) **EP 2 658 067 A1**
(43) Veröffentlichungstag der Anmeldung: **30.10.2013**
(21) Anmeldenummer: 13150570.3
(22) Anmeldetag: 08.01.2013
(51) Int. Cl.: H02H 9/04, H02H 9/06, H01R 13/66, H01R 13/68

(54) **Vorrichtung zum Nachweis von Überspannung**

(30) Priorität: 26.04.2012 DE 102012103702; 24.09.2012 EP 12185740
(71) Anmelder: Technischer Vor Ort Service OHG, 30165 Hannover (DE)
(72) Erfinder: Wirth, Hartmut, 30165 Hannover (DE); Schulz, Andy, 30165 Hannover (DE)
(74) Vertreter: Taruttis, Stefan Georg

(57) **Zusammenfassung**

Die vorliegende Erfindung betrifft eine Vorrichtung und ein Verfahren zum Nachweis von Überspannung. Die Vorrichtung zeichnet sich dadurch aus, dass sie Spannungsindikatoren (4, F) enthält, die eingerichtet sind, nur oberhalb einer vorbestimmten Grenzspannung durchlässig zu sein und sich bei Durchgang irreversibel zu verändern. Entsprechend erlaubt eine Analyse der Spannungsindikatoren in einem Verfahren zum Nachweis von Überspannung einen Nachweis des Durchgangs bei oberhalb eines vorbestimmten Grenzwertes liegender Spannung.

## Beschreibung

Die vorliegende Erfindung betrifft eine Vorrichtung und ein Verfahren zum Nachweis von Überspannung. Die Vorrichtung weist zumindest einen spannungsführenden Leiter und zumindest einen nichtspannungsführenden Leiter auf, wobei der zumindest eine spannungsführende Leiter mit einem ersten Spannungsindikator verbunden ist, der eingerichtet ist, erst ab Erreichen einer vorbestimmten Grenzspannung durchlässig für Spannung zu sein.

### Stand der Technik

Es ist bekannt, technische Geräte zum Schutz vor Überspannungen durch Überspannungsableiter zu schützen. Die DE 38 34 868 A1 beschreibt Überspannungsableiter, die bei Auftreten einer Überspannung in einer Leitung leitend werden, sodass die anliegende Spannung reduziert und Schaden an dem zu schützenden Gerät vermieden wird.

Des Weiteren ist es zur Vermeidung von Überspannungsschäden aus der DE 197 22 580 C1 bekannt, Schutzstecker mit einem spannungsbegrenzenden Bauelement auszustatten, an dem ein Schmelzelement angeordnet ist. Im Falle einer Überspannung schmilzt das Schmelzelement und löst eine Sicherung aus, die die Überspannung in die Erde ableitet.

Die US 2005/0180080 A1 beschreibt eine Vorrichtung zum Schutz vor Überspannung, bei der ein am Ausgang einer Leitung angeordnetes technisches Gerät bei Auftreten einer Überspannung durch ein vorgeschaltetes Isolationselement geschützt wird, wobei die Überspannung nach Durchtritt durch einen Überspannungsableiter geerdet wird.

### Aufgabe der Erfindung

Es ist die Aufgabe der vorliegenden Erfindung, eine alternative Vorrichtung zum Nachweis von Überspannung bereitzustellen, die sich bei Durchtreten einer oberhalb einer vorbestimmten Grenzspannung liegenden Spannung durch einen Leiter irreversibel verändert und dadurch das Überschreiten der Grenzspannung in dem Leiter anzeigt. Eine weitere Aufgabe der vorliegenden Erfindung ist es, ein alternatives Verfahren zum Nachweis von Überspannung bereitzustellen, das durch Analyse zumindest eines Bauelementes einer Vorrichtung eine Beurteilung erlaubt, ob eine durch einen mit diesem Bauelement verbundenen Leiter hindurchgetretene Spannung einen vorbestimmten Grenzwert überschritten hat.

### Allgemeine Beschreibung der Erfindung

Die Erfindung löst diese Aufgaben durch Bereitstellung einer Vorrichtung und eines Verfahrens mit den Merkmalen der Ansprüche, insbesondere durch Bereitstellen einer Vorrichtung mit mindestens einem spannungsfiihrenden Leiter und zumindest einem nichtspannungsfiihrenden Leiter, die in einem Gehäuse angeordnet sind, wobei dem zumindest einen spannungsführenden Leiter ein erster Spannungsindikator, der ein erster Gasableiter mit nachgeschalteter Sicherung ist, parallelgeschaltet ist, der mit dem nichtspannungsführenden Leiter verbunden ist. Insbesondere kann die Vorrichtung aus den Elementen der Ansprüche bestehen.

Der spannungsführende Leiter ist ein Leiter, der dafür vorgesehen ist, Spannung zu führen. Der nichtspannungsführende Leiter kann insbesondere ein Nullleiter oder eine Erdung sein.

Bevorzugt weist das Gehäuse, in dem der zumindest eine spannungsführende Leiter und der zumindest eine nichtspannungsführende Leiter angeordnet sind, für jeden Leiter einen von außen zugänglichen Eingang und einen Ausgang auf. Entsprechend weist der spannungsführende Leiter an seinem ersten Ende einen Eingang und an seinem zweiten Ende einen Ausgang auf und ist zwischen diesen mit einem Eingang des ersten Spannungsindikators bzw. mit dem Eingang des ersten Gasableiters, der zusammen mit einer nachgeschalteten Sicherung den ersten Spannungsindikator bildet, verbunden, wobei der Ausgang des ersten Spannungsindikators bzw. der Ausgang der Sicherung, die zusammen mit dem ihr vorgeschalteten ersten Gasableiter den ersten Spannungsindikator bildet, mit dem nichtspannungsführenden Leiter verbunden ist. Entsprechend weist auch der nichtspannungsführende Leiter an seinem ersten Ende einen Eingang und an seinem zweiten Ende einen Ausgang auf. Für den Fall, dass der nichtspannungsführende Leiter ein Nullleiter ist, ist dieser bevorzugt zwischen seinem Eingang und seinem Ausgang mit dem Eingang eines zweiten Spannungsindikators verbunden, der ein zweiter Gasableiter mit nachgeschalteter Sicherung ist, wobei der zweite Spannungsindikator dem Nullleiter parallelgeschaltet ist und sein Ausgang mit dem spannungsführenden Leiter oder einer Erdung verbunden ist.

Erfindungsgemäß sind die Leiter und die Spannungsindikatoren von einem Gehäuse umfasst, das bevorzugt versiegelt ist, wobei die Eingänge und die Ausgänge des spannungsführenden Leiters und des nichtspannungsführenden Leiters die Öffnungen des Gehäuses überdecken. In dieser Ausführungsform sind die Eingänge und Ausgänge der spannungsführenden und nichtspannungsführenden Leiter bevorzugt von Kontakten gebildet, die passend zu Kontakten einer Verteilerdose, eines Telefonanschlusses, eines Antennenanschlusses und/oder eines Netzanschlusses angeordnet sind. Die Kontakte können dabei unabhängig voneinander in das Gehäuse hinein oder aus diesem heraus ragen. In einer bevorzugten Ausführungsform ist das Gehäuse ein Steckergehäuse bzw. ein Steckdosengehäuse und die Kontakte sind jeweils passend angeordnet, um mit Kontakten einer Verteilerdose, eines Telefonanschlusses, eines Antennenanschlusses oder eines Netzanschlusses eine Steckverbindung einzugehen. Für die Zwecke der Erfindung sind Spannungsindikatoren Gasableiter (auch als Gasentladungsröhre bezeichnet) mit nachgeschalteter Sicherung, wobei die Gasableiter eingerichtet sind, erst ab dem Erreichen einer vorbestimmten Grenzspannung elektrisch leitend zu sein und bei oder unterhalb der vorbestimmten Grenzspannung nicht durchlässig für Spannung zu sein. Die Spannungsindikatoren sind durch die den Gasableitern nachgeschalteten Sicherungen eingerichtet, sich bei Durchtritt von Spannung in zumindest einer Eigenschaft, z.B. einer optischen, physikalischen oder chemischen Eigenschaft, irreversibel zu verändern und dadurch den Durchtritt von Spannung anzuzeigen. Denn bei Durchtritt von Spannung oberhalb einer vorbestimmten Grenzspannung durch einen Leiter wird der mit diesem Leiter verbundene Gasableiter durchlässig für Spannung, sodass Spannung in die dem Gasableiter nachgeschaltete Sicherung eintritt. Die Sicherung ist eingerichtet, eine oberhalb der vorbestimmten Grenzspannung liegende Spannung bei Durchtritt durch den Spannungsindikator zu reduzieren, insbesondere ist die Sicherung eingerichtet, bei einer oberhalb der Grenzspannung anliegenden Spannung zu unterbrechen oder eine geringe Spannung zu leiten, z.B. eine am Ausgang des Spannungsindikators anliegende Spannung im Bereich von < 20 V zu erzeugen, wenn die am Eingang des Spannungsindikators anliegende Grenzspannung > 650 V ist.

Erfindungsgemäß bildet jeder Leiter, z.B. jeder des zumindest einen spannungsführenden Leiters und jeder Nullleiter und jede Erdung, jeweils zwischen Eingang und Ausgang eine durchgängige Verbindung, an der bevorzugt jeweils ein Spannungsindikator mit seinem Eingang angeschlossen ist, wobei der Spannungsindikator mit seinem Ausgang mit einem anderen der Leiter verbunden ist. Vorzugsweise ist ein erster Spannungsindikator, der parallel zu einem spannungsführenden Leiter geschaltet ist, mit seinem Ausgang mit einem Nullleiter oder einer Erdung verbunden und ein zweiter Spannungsindikator, der parallel zu einem Nullleiter geschaltet ist, ist mit seinem Ausgang mit einem spannungsführenden Leiter oder einer Erdung verbunden. Entsprechend ist die erfindungsgemäße Vorrichtung eingerichtet, eine am spannungsführenden Leiter anliegende Spannung unabhängig von ihrem Wert immer von dem Eingang des spannungsführenden Leiters zum Ausgang des spannungsführenden Leiters zu leiten und eine am Nullleiter anliegende Spannung unabhängig von ihrem Wert immer von dem Eingang des Nullleiters zu dem Ausgang des Nullleiters zu leiten.

Optional weist die Vorrichtung in der Verbindung zwischen jedem Spannungsindikator und der Erdung eine Sperrdiode auf, die eingerichtet ist, Spannung nur in eine Richtung, nämlich von dem zumindest einen Spannungsindikator in die Erdung, durchtreten zu lassen. Entsprechend ist die Sperrdiode eingerichtet, bei Durchtritt von Spannung von der Erdung in Richtung der Spannungsindikatoren zu sperren und somit zu verhindern, dass Spannung von der Erdung in einen mit einem spannungsführenden Leiter oder einem nichtspannungsführenden Leiter verbundenen Spannungsindikator eintritt.

Es ist bevorzugt, dass die erfindungsgemäße Vorrichtung jeweils eine zu jedem spannungsführenden Leiter parallelgeschaltete Verbindung zwischen dem Eingang des spannungsführenden Leiters und dem Ausgang eines weiteren Leiters, beispielsweise des Nullleiters oder einer Erdung aufweist, wobei jeder erste Spannungsindikator in dieser Verbindung angeordnet ist und an seinem Eingang mit dem spannungsführenden Leiter und an seinem Ausgang jeweils mit einem weiteren Leiter verbunden ist, insbesondere mit jeweils einem nichtspannungsführenden Leiter. Die erfindungsgemäße Vorrichtung ist daher eingerichtet, bei Anliegen einer oberhalb eines vorbestimmten Grenzwertes liegenden Spannung an dem spannungsführenden Leiter die Spannung nicht nur durch den spannungsführenden Leiter, sondern auch durch den zum spannungsführenden Leiter parallelgeschalteten ersten Spannungsindikator zu leiten.

Die zum Nullleiter parallelgeschaltete Verbindung mit dem darin angeordneten zweiten Spannungsindikator führt bei Anliegen einer oberhalb des vorbestimmten Grenzwertes liegenden Spannung an dem Nullleiter die Spannung durch den zu dem Nullleiter parallelgeschalteten zweiten Spannungsindikator, wobei der Nullleiter selbst ebenfalls diese Spannung unverändert durchleitet.

Eine am Eingang des spannungsführenden Leiters anliegende Spannung oberhalb des vorbestimmten Grenzwerts nimmt in der parallelgeschalteten Verbindung aufgrund der Anordnung des spannungsführenden Leiters und dem zu dem spannungsführenden Leiter parallelgeschalteten ersten Spannungsindikator, der mit seinem dem spannungsführenden Leiter gegenüberliegenden Ausgang mit einem nichtspannungsführenden Leiter verbunden ist, durch die Parallelschaltung zum spannungsführenden Leiter den gleichen Wert an. Daher ist die Vorrichtung eingerichtet, durch irreversible Veränderung des ersten Spannungsindikators bzw. durch irreversible Veränderung der Sicherung, die zusammen mit einem vorgeschalteten ersten Gasableiter den ersten Spannungsindikator bildet, das Überschreiten einer vorbestimmten Grenzspannung in dem spannungsführenden Leiter anzuzeigen. Entsprechend erzeugt auch eine am Nullleiter anliegende Spannung oberhalb des vorbestimmten Grenzwerts in dem zu diesem parallelgeschalteten zweiten Spannungsindikator eine nachweisbare irreversible Veränderung.

Es ist daher ein Vorteil der erfindungsgemäßen Vorrichtung, dass durch die Parallelschaltung eines erst oberhalb einer vorbestimmten Grenzspannung für Spannung durchlässigen Spannungsindikators zu einem Leiter durch eine irreversible Veränderung des Spannungsindikators das Überschreiten der Grenzspannung in diesem Leiter anzeigt wird bzw. durch das Ausbleiben der Veränderung des Spannungsindikators angezeigt wird, dass in diesem Leiter die vorbestimmte Grenzspannung nicht überschritten wurde. Auf diese Weise ermöglicht die Analyse nur eines Bauteils, nämlich der Sicherung des jeweiligen Spannungsindikators, eine einfache und zuverlässige Aussage darüber, ob ein an dem zum Spannungsindikator parallelgeschalteten Leiter angeschlossenes Gerät eine oberhalb der Grenzspannung liegende Spannungsspitze erhielt und z.B. durch eine oberhalb der Grenzspannung liegende Spannung geschädigt wurde. Es ist daher im Rahmen der Suche einer Ursache für den Defekt eines an der erfindungsgemäßen Vorrichtung angeschlossenen technischen Gerätes nicht notwendig, den Leiter selbst vollständig und/oder das an dem Leiter angeschlossene Gerät zu analysieren, um beurteilen zu können, ob die Ursache des Defektes im Überschreiten der Grenzspannung in einem der Leiter lag oder nicht.

In einer Ausführungsform ist das Gehäuse der Vorrichtung ein Gehäuse zur Aufnahme von Steckern. In dieser Ausführungsform ist die Vorrichtung daher nach Art einer Steckverbindung einerseits mit einem Leiter und andererseits mit einem technischen Gerät verbindbar ist. In einem Verfahren zum Nachweis einer Überspannung wird die Vorrichtung daher bevorzugt durch Lösen der Steckverbindung von dem Leiter und dem technischen Gerät entfernt und die irreversibel veränderbare Eigenschaft des zumindest einen Spannungsindikators bestimmt. Ein Feststellen des Vorliegens oder des Fehlens der irreversiblen Veränderung des zumindest einen Spannungsindikators erlaubt eine Beurteilung, ob die Grenzspannung in dem mit dem Spannungsindikator verbundenen Leiter überschritten wurde, ohne dass dazu notwendigerweise der Leiter selbst oder das zuvor an diesem angeschlossene technische Gerät analysiert werden müsste.

Weiterhin erlaubt die Erfindung durch Bestimmung der irreversibel veränderbaren Eigenschaft der Spannungsindikatoren auf einfache Weise eine Feststellung, in welchem Leiter der Vorrichtung die vorbestimmte Grenzspannung überschritten wurde, da bevorzugt jedem Leiter, insbesondere jedem spannungsführenden Leiter und dem Nullleiter, ein Spannungsindikator parallelgeschaltet ist, der das Überschreiten der Grenzspannung in diesem Leiter, bevorzugt unabhängig von den weiteren Leitern der Vorrichtung, anzeigt.

Weiter vorteilhaft ist die Manipulationssicherheit der Vorrichtung, da die Leiter sowie die parallelgeschalteten Spannungsindikatoren in einem geschlossenen und bevorzugt versiegelten Gehäuse angeordnet sind, wobei vorzugsweise die Eingänge und die Ausgänge der Leiter die einzigen Öffnungen des Gehäuses überdecken. Es ist daher bei Verwendung der Vorrichtung durch Anordnung in einer Leitung, an der ein technisches Gerät angeschlossen ist, möglich, das einmalige Anliegen einer Spannung oberhalb der Grenzspannung anhand der irreversiblen Veränderung eines Spannungsindikators nachzuweisen. Hingegen ist es bei Anordnung der Vorrichtung in einer Leitung, an der ein Gerät anschlossen ist, nicht möglich, durch Manipulation des Gerätes den Eindruck der Einwirkung einer sehr hohen Spannung, wie z.B. durch einen Blitzeinschlag, zu erwecken, obwohl eine Kurzschlussspannung mit geringerer Spannungsamplitude den Defekt des daran angeschlossenen Gerätes verursacht hat. Denn der Nachweis einer Überspannung oberhalb der Grenzspannung kann nur durch Feststellen des Durchtritts von Spannung durch den Spannungsindikator erfolgen, wobei der Spannungsindikator aufgrund der Anordnung in dem Gehäuse von außen nicht zugänglich und daher nicht manipulierbar ist.

Insbesondere erlaubt die Vorrichtung durch die Einstellung der Grenzspannung, ab deren Überschreiten die Spannungsindikatoren zu einer irreversiblen Veränderung eingerichtet sind, eine Differenzierung zwischen dem Auftreten einer Überspannung, die oberhalb der Grenzspannung liegt, z.B. oberhalb einer Grenzspannung von 650 V, die infolge eines Blitzschlags überschritten wird, und dem Auftreten einer Spannungsspitze unterhalb der Grenzspannung, wie sie z.B. durch Kurzschlussüberspannung verursacht wird, für jeden einzelnen Leiter.

Erfindungsgemäß sind der zumindest eine erste und der zweite Spannungsindikator bzw. die Gasableiter des zumindest einen ersten und des zweiten Spannungsindikators eingerichtet, erst ab dem Erreichen einer Grenzspannung, die insbesondere im Bereich zwischen 500 und 800 V, bevorzugt zwischen 600 und 700 V, und besonders bevorzugt auf 650 V eingestellt ist, für Spannung durchlässig zu sein. Kurzschlussüberspannungen erreichen eine maximale Spannungsamplitude von < 650 V, sodass für den Fall, dass der erste Spannungsindikator eingerichtet ist, erst oberhalb einer Grenzspannung von 650 V elektrisch leitend zu sein, eine mit dem Durchtritt von Spannung einhergehende Veränderung einer Eigenschaft des Spannungsindikators den Durchtritt einer blitzbedingten Überspannung in dem parallelgeschalteten Leiter anzeigt.

In einer einfachen Ausführungsform weist eine erfindungsgemäße Vorrichtung auf oder besteht aus zumindest einem spannungsführenden Leiter und zumindest einem nichtspannungsführenden Leiter, wobei der spannungsführende Leiter an seinem ersten Ende einen Eingang und an seinem gegenüberliegenden zweiten Ende einen Ausgang aufweist, wobei der spannungsführende Leiter mit einem parallelgeschalteten ersten Spannungsindikator verbunden ist, der ein erster Gasableiter mit nachgeschalteter Sicherung ist, und der Ausgang des ersten Spannungsindikators mit dem nichtspannungsführenden Leiter verbunden ist, und wobei der erste Spannungsindikator eingerichtet ist, erst oberhalb einer vorbestimmten Grenzspannung elektrisch zu leiten und sich bei Anliegen einer Spannung oberhalb der Grenzspannung in zumindest einer Eigenschaft irreversibel zu verändern, bzw. unterhalb der Grenzspannung zu sperren.

Es ist daher ein weiterer Vorteil der erfindungsgemäßen Vorrichtung, dass diese aus nur wenigen Bauteilen bestehen kann, und insbesondere zusätzlich zu einem Spannungsindikator keinen Spannungssensor aufweist, der eingerichtet ist, bei Detektieren einer Überspannung die Leitung in einem spannungsführenden Leiter durch eine Sicherung oder ein geeignetes zusätzliches Bauteil zu unterbrechen. Entsprechend ist die erfindungsgemäße Vorrichtung auch kostengünstiger als z.B. Vorrichtungen, die zusätzlich zu einem Spannungsindikator einen Spannungssensor und eine in dem spannungsführenden Leiter angeordnete Sicherung aufweisen.

In Ausführungsformen, in denen die Vorrichtung zusätzlich zu dem zumindest einen spannungsführenden Leiter zwei nichtspannungsführende Leiter aufweist, von denen einer ein Nullleiter und der andere eine Erdung ist, kann der Ausgang des ersten Spannungsindikators mit dem Nullleiter und/oder mit der Erdung verbunden sein. Der Ausgang des optionalen dem Nullleiter parallelgeschalteten zweiten Spannungsindikators kann mit dem spannungsführenden Leiter und/oder mit der Erdung verbunden sein.

Optional weist die Vorrichtung einen oder zwei weitere spannungsführende Leiter auf, die wie mit Bezug auf den zumindest einen spannungsführenden Leiter beschrieben jeweils einen parallelgeschalteten ersten Spannungsindikator aufweisen, dessen Ausgang mit einem der anderen Leiter, beispielsweise dem Nullleiter oder der Erdung verbunden ist.

Erfindungsgemäß weist die Vorrichtung zumindest eine Sicherung auf, die dem ersten Gasableiter nachgeschaltet ist, der dem zumindest einen spannungsführenden Leiter parallelgeschaltet ist. Diese Sicherung ist zwischen dem Ausgang des ersten Gasableiters und dem daran angeschlossenen Leiter angeordnet.

In Ausführungsformen mit mehreren Spannungsindikatoren kann jedem ersten und jedem zweiten Gasableiter jeweils eine separate Sicherung nachgeschaltet sein, sodass insbesondere die Vorrichtung dieselbe Anzahl Gasableiter wie Sicherungen aufweist. Die Sicherung ist eingerichtet, bei Anliegen von Spannung zu unterbrechen, insbesondere bei Anliegen einer Spannung, die nach Eintritt einer oberhalb der Grenzspannung liegenden Spannung in einen Gasableiter am Ausgang des Gasableiters anliegt.

In einer bevorzugten Ausführungsform mit mehreren ersten Spannungsindikatoren weist eine Vorrichtung mehrere Leiter mit jeweils einem parallelgeschalteten ersten Gasableiter auf, wobei die Ausgänge aller ersten Gasableiter mit nur einer gemeinsamen Sicherung verbunden sind. Die Sicherung ist gegenüber den Spannungsindikatoren vorzugsweise mit einer Erdung verbunden.

Optional kann die Vorrichtung zum Nachweis von Überspannung auch eine oder mehrere Datenleitungen mit dazugehörigen Eingängen und Ausgängen zur Aufnahme von Steckern aufweisen, z.B. LAN-Eingänge, die über Datenleitungen mit LAN-Ausgängen verbunden sind. In dieser Ausführungsform sind die Kontakte der Eingänge der Datenleitungen, z.B. der LAN-Eingänge, und die Kontakte der Ausgänge der Datenleitungen, z.B. der LAN-Ausgänge, identisch passend miteinander elektrisch kontaktiert. Jeder dieser Datenleitungen ist dabei ein erster Spannungsindikator parallelgeschaltet, der ein erster Gasableiter mit nachgeschalteter Sicherung ist und der eingerichtet ist, erst ab Überschreiten einer vorbestimmten Grenzspannung Spannung durch den ersten Gasableiter und in die Sicherung eintreten zu lassen und den Durchtritt von Spannung durch eine irreversible Veränderung einer Eigenschaft der Sicherung anzuzeigen. Wahlweise kann allen Datenleitungen ein gemeinsamer erster Gasableiter parallelgeschaltet sein, oder alternativ kann jeder Datenleitung ein erster Gasableiter parallelgeschaltet sein. In der letztgenannten Ausführungsform ist entweder jedem ersten Gasableiter eine eigene Sicherung nachgeschaltet, oder allen ersten Gasableitern ist eine gemeinsame Sicherung nachgeschaltet, wobei die Sicherung jeweils gegenüber den ersten Gasableitern vorzugsweise mit der Erdung verbunden.

Es ist bevorzugt, dass alle Leiter der Vorrichtung, insbesondere der zumindest eine spannungsführende Leiter, der Nullleiter und/oder die Erdung mit ihren jeweils parallelgeschalteten Spannungsindikatoren in einem versiegelten Gehäuse angeordnet sind und jeweils nur der Eingang und der Ausgang jedes Leiters von außen zugänglich sind. Bevorzugt sind die Eingänge und Ausgänge aller spannungsführenden Leiter und aller nichtspannungsführenden Leiter dabei von Kontakten gebildet, die die einzigen Öffnungen des Gehäuses überdecken.

In einer bevorzugten Ausführungsform weist die Vorrichtung eine Einrichtung zur Datenübermittlung auf, wobei die Einrichtung zur Datenübermittlung ausschließlich mit Leitern verbunden ist, die einen Spannungsindikator aufweisen, und wobei die Spannungsindikatoren der Einrichtung zur Datenübermittlung vorgeschaltet sind. An ihrem Eingang ist die Einrichtung zur Datenübermittlung daher ausschließlich mit dem Ausgang eines Spannungsindikators oder mit den Ausgängen mehrerer Spannungsindikatoren verbunden, sodass die Einrichtung zur Datenübermittlung nur dann ein Signal erhält, wenn in einem oder mehreren der mit Spannungsindikatoren verbundenen Leitern die vorbestimmte Grenzspannung überschritten wurde. Die Einrichtung zur Datenübermittlung ist eingerichtet, bei Detektion einer Spannung ein erstes Signal an einen Empfänger zu übermitteln, das das Auftreten von Überspannung in zumindest einem Leiter anzeigt und das weiterhin ein Identifikationsmerkmal der Vorrichtung, insbesondere eine Seriennummer, enthält. Für die Datenübermittlung weist die Einrichtung zur Datenübermittlung daher einen Sender auf. Weiterhin weist die Einrichtung zur Datenübermittlung einen Speicher auf, in dem das Identifikationsmerkmal gespeichert ist. Da die Einrichtung zur Datenübermittlung aufgrund ihrer Anordnung nur einen Spannungsimpuls erhalten kann, wenn in zumindest einem Leiter der Vorrichtung eine vorbestimmte Grenzspannung überschritten wurde und der diesem Leiter parallelgeschaltete und der Einrichtung zur Datenübermittlung vorgeschaltete Spannungsindikator durchlässig für Spannung wurde, zeigt das Auslösen der Einrichtung zur Datenübermittlung, d.h. das Senden des ersten Signals an einen Empfänger das Überschreiten der vorbestimmten Grenzspannung in zumindest einem Leiter der Vorrichtung an. In bevorzugter Ausführungsform ist der Sender der Einrichtung zur Datenübermittlung ein Funksender, der eingerichtet ist, bei Detektion eines Spannungsimpulses durch die Einrichtung zur Datenübermittlung ein Funksignal, beispielsweise ein UMTS-Signal, ein LTE-Signal (3,9 G-Standard, Übertragungsrate bis zu 300 Mbit/s, spektrale Bandbreite von 1,4-20 MHz, oder LTE-Advanced nach ITU bzw. LTE-Advanced nach 3GPP, jeweils mit Übertragungsraten bis zu 1000 Mbit/s und spektralen Bandbreiten von 20-100 MHz), ein GPRS-Signal oder ein Bluetooth-Signal, an einen Empfänger zu senden. Alternativ kann der Sender auch ein SMS-Sender oder ein auf einen anderen Übertragungsstandard eingerichteter Sender sein.

In dieser Ausführungsform weist die Vorrichtung bevorzugt weiterhin eine Einrichtung zur Positionsbestimmung auf. Dabei kann die Einrichtung zur Positionsbestimmung Bestandteil der Einrichtung zur Datenübermittlung sein oder alternativ mit dieser verbunden sein, wobei sie im letzteren Fall ausschließlich mit Leitern verbunden ist, die einen Spannungsindikator aufweisen, der der Einrichtung zur Positionsbestimmung vorgeschaltet ist. Die Einrichtung zur Positionsbestimmung weist einen Standortanzeiger auf, der eingerichtet ist, den aktuellen Standort der Vorrichtung zu ermitteln. Der Standortanzeiger kann beispielsweise ein GPS-Empfänger oder ein Galileo-Empfänger sein. Weiterhin weist die Einrichtung zur Positionsbestimmung einen Sender auf, der eingerichtet ist, bei Detektion einer Spannung und/oder bei Auslösen der Einrichtung zur Datenübermittlung ein zweites Signal an einen Empfänger zu senden, das den aktuellen Standort der Vorrichtung und den Zeitpunkt des Auslösens der Einrichtung zur Positionsbestimmung enthält. Der Sender kann beispielsweise ein SMS-Sender, ein Bluetooth-Sender oder ein auf einen anderen Übertragungsstandard eingerichteter Funksender sein. Für den Fall, dass die Einrichtung zur Positionsbestimmung ein Bestandteil der Einrichtung zur Datenübermittlung ist, können diese einen gemeinsamen Sender aufweisen. In dieser Ausführungsform ist die Vorrichtung eingerichtet, bei Detektion eines Spannungsimpulses in der Einrichtung zur Datenübermittlung von dem gemeinsamen Sender ein Signal, z.B. ein Funksignal, ein UMTS-Signal, ein LTE-Signal, ein GPRS-Signal, ein SMS-Signal oder ein Bluetooth-Signal gesendet, das zumindest den aktuellen Standort der Vorrichtung enthält. Der Erhalt dieses Signals durch einen Empfänger zeigt daher zum einen an, dass die Einrichtung zur Positionsbestimmung ein Spannungssignal empfangen hat, was nur auf eine Überspannung in einem parallelgeschalteten Leiter zurückzuführen ist, zum anderen wird der aktuelle Standort der Vorrichtung übermittelt, bevorzugt in einem Signal, das die Daten zur Positionsbestimmung und die Daten über die Detektion eines Spannungsimpulses vereint, insbesondere diese Daten verschlüsselt kombiniert enthält.

Die Einrichtung zur Datenübermittlung und/oder die Einrichtung zur Positionsbestimmung weisen bevorzugt jeweils eine Energieversorgung auf, wobei die Energieversorgung eine unabhängige Energieversorgung, insbesondere eine Batterie, sein kann. Alternativ kann die Energieversorgung auch eine wiederaufladbare Energieversorgung sein, die beispielsweise über eine zwischengeschaltete Sicherung mit einem spannungsführenden Leiter verbunden ist, wobei die Sicherung eingerichtet ist, bei Überschreiten der normalen Netzspannung, beispielsweise bei einer Spannung oberhalb von 230 V zu unterbrechen.

In einer bevorzugten Ausführungsform ist eine erfindungsgemäße Vorrichtung Bestandteil eines Systems, das zusätzlich zu der Vorrichtung eine computergestützte Datenbank aufweist, die zum Empfang von Signalen der Einrichtung zur Datenübermittlung eingerichtet ist. Die computergestützte Datenbank ist eingerichtet, die empfangenen Identifikationsmerkmale gespeicherten Daten zuzuordnen, z.B. durch Identifizieren der Identifikationsmerkmale in der Datenbank und Ausgeben von Daten, die diesen Identifikationsmerkmalen zugeordnet sind. Dabei ist die Vorrichtung mit bzw. aus einem Gehäuse gebildet, in dem zumindest ein spannungsführender Leiter, ein Nullleiter, eine Erdung, zumindest eine Sicherung sowie optional eine Einrichtung zur Datenübermittlung und eine Einrichtung zur Positionsbestimmung angeordnet sind, wobei dem spannungsführenden Leiter und dem Nullleiter jeweils ein Spannungsindikator parallelgeschaltet ist, der ein Gasableiter mit nachgeschalteter Sicherung ist und eingerichtet ist, erst oberhalb einer vorbestimmten Grenzspannung elektrisch leitend zu sein und sich dabei in zumindest einer Eigenschaft irreversibel zu verändern, und wobei die Einrichtung zur Datenübermittlung, die Einrichtung zur Positionsbestimmung und die zumindest eine Sicherung zumindest einem Spannungsindikator nachgeschaltet sind.

Ein spannungsführender Leiter kann z.B. ein spannungsführender Leiter eines Stromnetzes oder eine Signalübertragungsleitung sein, z.B. eine Antennenleitung oder ein Leiter einer Telefonleitung. Eine erfindungsgemäße Vorrichtung zum Nachweis von Überspannung ist daher insbesondere zur Anordnung an eine Verteilerdose für Netzspannung, an eine Stromversorgung, an einen Telefonanschluss und/oder an einen Antennenanschluss angepasst, z.B. dadurch, dass das Gehäuse passend zu einer Verteilerdose, zu einem Telefonanschluss, bzw. zu einem Antennenanschluss geformt ist und die Eingänge der Leiter passend zu den Kontakten der Verteilerdose, des Telefonanschlusses bzw. des Antennenanschlusses angeordnet sind, während die Ausgänge der Leiter wie die Kontakte der Verteilerdose, des Telefonanschlusses bzw. des Antennenanschlusses angeordnet sind. In dieser Ausführungsform ist die Vorrichtung zur Anordnung zwischen einer Verteilerdose für Netzspannung, einer Anschlussdose für eine Stromversorgung, einem Telefonanschluss und/oder einem Antennenanschluss und dem jeweils passenden Stecker geeignet.

Weiterhin stellt die Erfindung ein Verfahren zum Nachweis einer Überspannung bereit, das die folgenden Schritte aufweist:
- Bereitstellen einer erfindungsgemäßen Vorrichtung,
- Durchtretenlassen von Spannung durch den spannungsführenden Leiter und durch den Nullleiter,
   wobei nur bei Überschreiten der Grenzspannung in einem Leiter der dazu parallelgeschaltete Spannungsindikator irreversibel verändert wird und bevorzugt die Sicherung, die zusammen mit dem ihr vorgeschalteten ersten Gasableiter den ersten Spannungsindikator bildet, sperrt,
- Bestimmen einer irreversibel veränderbaren Eigenschaft der Sicherung, bevorzugt durch optische oder chemische Analyse, und Vergleichen der analysierten Eigenschaft mit der Eigenschaft, die analysierbar ist, wenn keine Spannung durch die Sicherung getreten ist und/oder Vergleichen mit der Eigenschaft, die analysierbar ist, wenn eine Spannung oberhalb der Grenzspannung durch die Sicherung getreten ist,
- Feststellen des Vorliegens oder des Fehlens einer irreversiblen Veränderung zumindest eines Spannungsindikators durch Feststellen des Vorliegens oder des Fehlens einer irreversiblen Veränderung der Sicherung,
- bevorzugt mit dem Schritt der Bewertung der Feststellung dahingehend, dass das Fehlen einer irreversiblen Veränderung der Eigenschaft zumindest eines Spannungsindikators als Nachweis dafür gewertet wird, dass keine Spannung oberhalb der Grenzspannung durch den Spannungsindikator getreten ist, während das Vorliegen einer irreversiblen Veränderung als Nachweis für einen Durchtritt von Spannung oberhalb der Grenzspannung durch den Spannungsindikator und für das Anliegen einer Spannung oberhalb der vorbestimmten Grenzspannung in dem mit diesem Spannungsindikator parallelgeschalteten Leiter gewertet wird.

Die Analyse einer Sicherung in dem Verfahren zum Nachweis von Überspannung schließt insbesondere das Feststellen einer Unterbrechung in dem Schaltkreis an der Position der Sicherung ein, wobei eine Unterbrechung des Schaltkreises an der Position der Sicherung als Nachweis für den Durchtritt einer Spannung oberhalb des vorbestimmten Grenzwertes in einem vorgeschalteten Spannungsindikator und für das Durchtreten einer oberhalb des vorbestimmten Grenzwertes liegenden Spannung durch den dem Spannungsindikator parallelgeschalteten Leiter bewertet wird. Ist der Schaltkreis an der Position der Sicherung dagegen nicht unterbrochen, wird dies bevorzugt als Nachweis dafür gewertet, dass an dem der Sicherung vorgeschalteten Gasableiter keine Spannung oberhalb der Grenzspannung angelegen hat und entsprechend auch keine oberhalb der Grenzspannung liegende Spannung durch den parallelgeschalteten Leiter hindurchgetreten ist.

Optional weist ein erfindungsgemäßes Verfahren zum Nachweis einer Überspannung den Schritt des Analysierens eines defekten Gerätes, des Analysierens des mit diesem Gerät parallelgeschalteten Spannungsindikators und des anschließenden Vergleichs beider Analysenergebnisse auf. Der Vergleich der Analysenergebnisse erlaubt dabei insbesondere einen Nachweis, ob das defekte Gerät mit einer oberhalb der Grenzspannung liegenden Spannung kontaktiert worden ist. Dies ist dann der Fall, wenn einerseits das technische Gerät defekt ist, insbesondere für das Anliegen einer Überspannung charakteristische Schäden aufweist, und andererseits der Spannungsindikator durch Vorliegen einer irreversiblen Veränderung anzeigt, dass eine oberhalb der Grenzspannung liegende Spannung hindurchgetreten ist. Andernfalls erlauben ein defektes Gerät und ein Spannungsindikator ohne irreversible Veränderung den Nachweis, dass das Gerät nicht mit Spannung oberhalb der vorbestimmten Grenzspannung kontaktiert wurde.

In einer bevorzugten Ausführungsform weist das Verfahren zum Nachweis von Überspannung zusätzlich den Schritt des Detektierens einer Spannung durch eine Einrichtung zur Datenübermittlung und den nachfolgenden Schritt des Sendens eines ersten Signals durch einen Sender der Einrichtung zur Datenübermittlung an einen Empfänger auf, wobei das Signal ein Nachweis von Durchtritt von Spannung oberhalb der vorbestimmten Grenzspannung durch einen vorgeschalteten Spannungsindikator und durch einen mit diesem Spannungsindikator verbundenen Leiter ist. Der Sender kann dabei insbesondere ein SMS-Sender, ein Bluetooth-Sender oder ein Funksender sein, der für einen anderen Übertragungsstandard eingerichtet ist, z.B. für UMTS, LTE oder GPRS. Weiterhin weist das Verfahren bevorzugt einen Schritt des Abrufens von Identifikationsmerkmalen der Vorrichtung aus einem Speicher der Einrichtung zur Datenübermittlung auf, wobei ein Identifikationsmerkmal insbesondere eine Seriennummer der Vorrichtung sein kann. In dieser Ausführungsform ist es bevorzugt, dass das Verfahren einen Schritt des Sendens eines ersten Signals aufweist, wobei das Signal das Identifikationsmerkmal enthält und gleichzeitig das Überschreiten der Grenzspannung in einem vorgeschalteten Leiter anzeigt.

Bevorzugt weist das Verfahren weiterhin einen Schritt der Positionsbestimmung durch einen Standortanzeiger einer Einrichtung zur Positionsbestimmung und einen Schritt des Sendens eines zweiten Signals durch einen Sender der Einrichtung zur Positionsbestimmung an einen Empfänger auf, wobei das Signal insbesondere Informationen zum Standort der Vorrichtung zum Zeitpunkt des Detektierens von Spannung enthält. Der Standortanzeiger kann dabei insbesondere ein GPS-Empfänger oder ein Galileo-Empfänger sein, der Sender kann insbesondere ein SMS-Sender, ein Bluetooth-Sender oder ein Funksender sein.

Optional kann ein Verfahren zum Nachweis von Überspannung weiterhin einen Schritt des Abrufens von Daten aus einer computergestützten Datenbank durch einen Empfänger und des Zuordnens der Daten zu den mit dem ersten Signal gesendeten Identifikationsmerkmalen aufweisen. Bevorzugt kann es sich bei den aus der computergestützten Datenbank abgerufenen Daten um Daten eines bestimmten Versicherungsnehmers handeln, wobei der Empfänger, der die Daten abruft, insbesondere ein Versicherer sein kann. Bevorzugt erfolgt der Schritt des Abrufens von Daten aus der computergestützten Datenbank automatisiert, nachdem der Empfänger das erste und das zweite Signal von der Einrichtung zur Datenübermittlung und der Einrichtung zur Positionsbestimmung erhalten hat. Auf diese Weise erlaubt ein Verfahren zum Nachweis von Überspannung daher eine schnelle Zuordnung, durch welche Vorrichtung zu welchem Zeitpunkt an welchem Standort eine oberhalb der vorbestimmten Grenzspannung liegende Spannung hindurchgetreten ist.

Für die Zwecke der Erfindung gilt generell die Beschreibung der Schritte des Verfahrens auch als Beschreibung der Vorrichtung, die zur Durchführung des Verfahrens eingerichtet ist. Entsprechend gilt die Beschreibung von Vorrichtungsmerkmalen generell auch als Beschreibung von Verfahrensschritten, zu deren Durchführung die Vorrichtung eingerichtet ist.

### Genaue Beschreibung der Erfindung

Die Erfindung wird nun genauer anhand von Beispielen und mit Bezug auf die Figuren beschrieben, in denen schematisch
- Fig. 1 eine einfache Ausführungsform einer Vorrichtung zum Nachweis von Überspannung zeigt,
- Fig. 2 eine weitere Ausführungsform einer Vorrichtung zum Nachweis von Überspannung zeigt,
- Fig. 3 eine bevorzugte Vorrichtung zum Nachweis von Überspannung,
- die Figuren 4 bis 6 eine Vorrichtung zum Nachweis von Überspannung mit von der Stromversorgung unabhängigen Datenleitungen in Form einer Steckdosenleiste, und
- Fig. 7 eine weitere Ausführungsform einer Vorrichtung als System zum Nachweis von Überspannung mit einer computergestützten Datenbank und einem Empfänger zeigt.

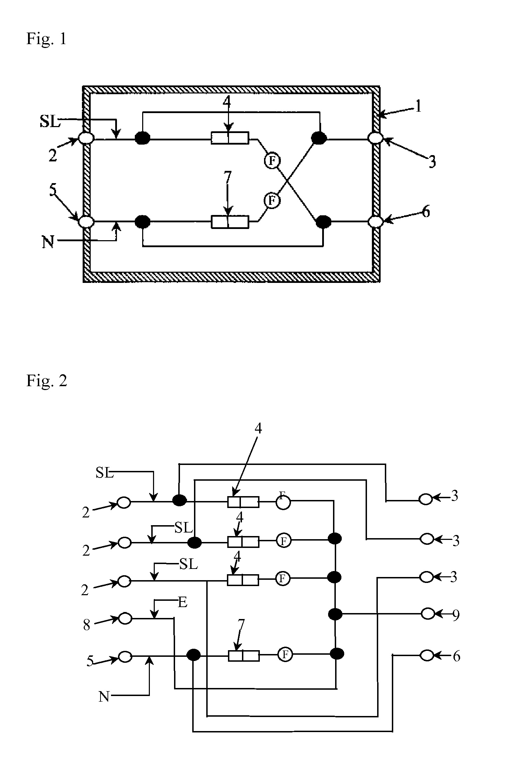

Die Fig. 1 zeigt eine einfache Ausführungsform einer Vorrichtung zum Nachweis von Überspannung, in der die Vorrichtung einen spannungsführenden Leiter SL und einen nichtspannungsführenden Leiter NL aufweist, der ein Nullleiter ist. Der spannungsführende Leiter SL hat an seinem ersten Ende einen Eingang 2 und an seinem gegenüberliegenden Ende einen Ausgang 3. Weiterhin ist dem spannungsführenden Leiter SL ein erster Spannungsindikator parallelgeschaltet, der ein erster Gasableiter 4 mit nachgeschalteter Sicherung F ist. Der erste Spannungsindikator ist dadurch, dass der erste Gasableiter eingerichtet ist, nur oberhalb einer vorbestimmten Grenzspannung durchlässig für Spannung zu sein, für Spannung unterhalb der vorbestimmten Grenzspannung undurchlässig. Gegenüber dem ersten Gasableiter 4 ist die Sicherung F mit dem Nullleiter N verbunden.

Der Nullleiter N weist an seinem ersten Ende einen Eingang 5 und an seinem gegenüberliegenden zweiten Ende einen Ausgang 6 auf. Weiterhin ist dem Nullleiter N ein zweiter Spannungsindikator parallelgeschaltet, der ein zweiter Gasableiter 7 mit nachgeschalteter Sicherung F ist. Der zweite Spannungsindikator ist dadurch, dass der zweite Gasableiter eingerichtet ist, erst oberhalb einer vorbestimmten Grenzspannung durchlässig für Spannung zu sein für Spannung unterhalb der vorbestimmten Grenzspannung undurchlässig. Gegenüber dem zweiten Gasableiter 7 ist die Sicherung F mit dem spannungsführenden Leiter SL verbunden.

Der spannungsführende Leiter SL und der Nullleiter N sind mit ihren Eingängen 2, 5 und mit ihren Ausgängen 3, 6 sowie mit ihren jeweils parallelgeschalteten Spannungsindikatoren in einem Gehäuse 1 angeordnet, wobei die Eingänge 2, 5 und die Ausgänge 3, 6 des spannungsführenden Leiters und des Nullleiters die einzigen Öffnungen des Gehäuses überdecken.

Die Fig. 2 zeigt eine weitere Ausführungsform einer Vorrichtung zum Nachweis von Überspannung. Die Vorrichtung weist drei spannungsführende Leiter SL auf, die jeweils an ihrem ersten Ende einen Eingang 2 und an ihrem gegenüberliegenden zweiten Ende einen Ausgang 3 aufweisen, und denen jeweils ein erster Spannungsindikator, bestehend aus einem ersten Gasableiter 4 und einer diesem nachgeschalteten Sicherung, parallelgeschaltet ist.

Zusätzlich zu den drei spannungsführenden Leitern SL weist die Vorrichtung zwei nichtspannungsführende Leiter NL, nämlich einen Nullleiter N und eine Erdung E auf, wobei der Nullleiter N an seinem ersten Ende einen Eingang 5 und an seinem gegenüberliegenden zweiten Ende einen Ausgang 6 aufweist und dem Nullleiter N ein zweiter Spannungsindikator, bestehend aus einem zweiten Gasableiter 7 und einer diesem nachgeschalteten Sicherung, parallelgeschaltet ist. Die Erdung E weist an ihrem ersten Ende einen Eingang 8 und an ihrem gegenüberliegenden zweiten Ende einen Ausgang 9 auf.

Den ersten und zweiten Gasableitern 4 und 7 ist in der gezeigten beispielhaften Ausführungsform jeweils eine separate Sicherung F nachgeschaltet. Jede der Sicherungen F ist mit dem Ausgang 9 der Erdung E verbunden und ist eingerichtet, bei Anliegen einer Spannung zu unterbrechen, z.B. bei einer Spannung von 20 V oder weniger.

Die spannungsführenden sowie die nichtspannungsführenden Leiter mit ihren parallelgeschalteten Gasableitern 4, 7 und den diesen nachgeschalteten Sicherungen F sind dabei in einem Gehäuse 1 (nicht gezeigt) angeordnet, wobei die Eingänge und die Ausgänge der Leiter Öffnungen des Gehäuses 1 überdecken.

In einer Variante der in Figur 2 gezeigten Ausführungsform ist den drei ersten Gasableitern 4 und dem zweiten Gasableiter 7 anstelle der jeweils separaten nachgeschalteten Sicherungen eine gemeinsame Sicherung nachgeschaltet, die in dieser Ausführungsform sowohl Bestandteil der drei ersten Spannungsindikatoren als auch Bestandteil des zweiten Spannungsindikators ist.

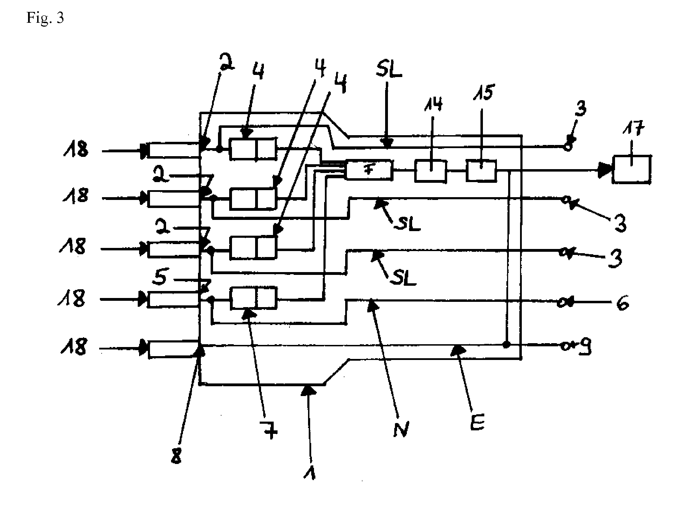

Die Figur 3 zeigt eine weitere bevorzugte Ausführungsform einer Vorrichtung zum Nachweis von Überspannung mit drei spannungsfiihrenden Leitern SL, einem Nullleiter N und einer Erdung E. In der gezeigten beispielhaften Ausführungsform weist das Gehäuse 1 der Vorrichtung fünf Kontakte 18 auf, von denen drei die Eingänge 2 jeweils eines spannungsführenden Leiters SL bilden, einer den Eingang 5 eines Nullleiters N bildet und ein weiterer den Eingang 8 einer Erdung E bildet. Die Eingänge 2 der spannungsfiihrenden Leiter SL sind jeweils über eine Parallelschaltung mit einem ersten Gasableiter 4 verbunden, der Eingang 5 des Nullleiters ist über eine Parallelschaltung mit einem zweiten Gasableiter 7 verbunden. Den ersten und zweiten Gasableitern 4,7 ist eine gemeinsame Sicherung F nachgeschaltet, der wiederum eine optionale Einrichtung zur Datenübermittlung 14 und eine optionale Einrichtung zur Positionsbestimmung 15 nachgeschaltet sind. Die Einrichtung zur Datenübermittlung 14 und die Einrichtung zur Positionsbestimmung 15 sind eingerichtet, bei Detektieren eines Spannungsimpulses ein Signal an einen Empfänger 17 zu senden, wobei das von der Einrichtung zur Datenübermittlung 14 gesendete Signal bevorzugt ein Identifikationsmerkmal der Vorrichtung beinhaltet und das von der Einrichtung zur Positionsbestimmung 15 gesendete Signal Informationen zum Standort der Vorrichtung zum Zeitpunkt der Detektion von Spannung enthält. Über die Einrichtung zur Datenübermittlung 14 und die Einrichtung zur Positionsbestimmung 15 ist die Sicherung F mit der Erdung E verbunden.

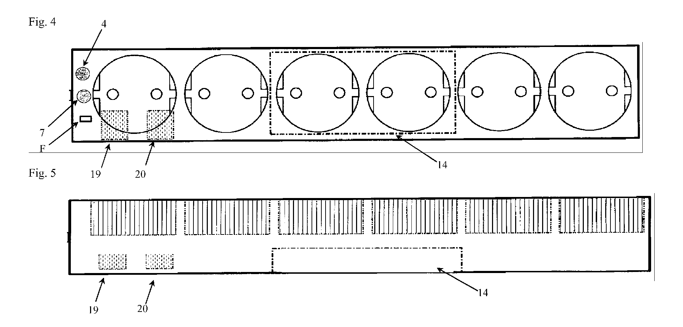

Die Figuren 4 bis 6 zeigen beispielhaft eine erfindungsgemäße Vorrichtung zum Nachweis von Überspannung mit von der Stromversorgung unabhängigen Datenleitungen in Form einer Steckdosenleiste. In der gezeigten beispielhaften Ausführungsform weist die Vorrichtung neun Datenleitungen auf, die jeweils einen Eingang 19 und einen Ausgang 20 aufweisen, z.B. einen LAN-Eingang 19 und LAN-Ausgang 20. Die Kontakte der Eingänge 19 der Datenleitungen und Ausgänge 20 der Datenleitungen sind identisch passend miteinander elektrisch kontaktiert. In der gezeigten Ausführungsform ist jeder Datenleitung ein eigener erster Gasableiter 4 parallelgeschaltet, der eingerichtet ist, erst ab Überschreiten einer vorbestimmten Grenzspannung durchlässig für Spannung zu sein. Jedem ersten Gasableiter 4, der einer Datenleitung parallelgeschaltet ist, ist eine eigene Sicherung F nachgeschaltet, die eingerichtet ist, bei Anliegen von Spannung zu unterbrechen. Auf der gegenüberliegenden Seite ist jede Sicherung F mit der Erdung E verbunden.

Die Vorrichtung weist weiterhin einen spannungsführenden Leiter SL auf, dem ein erster Spannungsindikator gleichgeschaltet ist, sowie einen Nullleiter N, dem ein zweiter Spannungsindikator gleichgeschaltet ist. Dem mit dem spannungsführenden Leiter SL verbundenen ersten Gasableiter 4 und dem mit dem Nullleiter N verbundenen zweiten Gasableiter 7 ist eine gemeinsame Sicherung F nachgeschaltet, die auf der gegenüberliegenden Seite mit der Erdung E verbunden ist und die eingerichtet ist, bei Anliegen von Spannung zu unterbrechen.

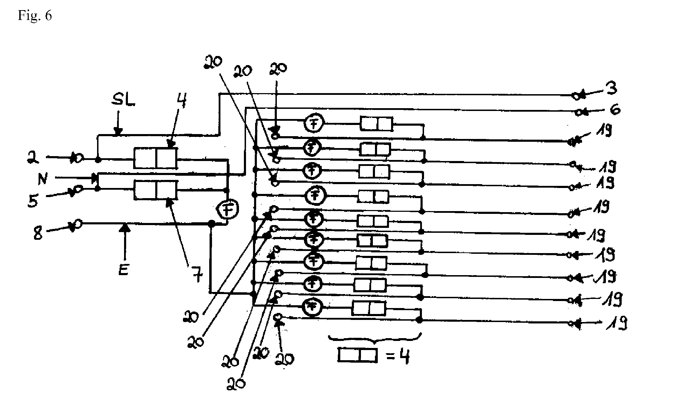

Alternativ zu der in Figur 6 gezeigten Ausführungsform, in der jedem ersten Gasableiter 4, der einer Datenleitung parallelgeschaltet ist, eine eigene Sicherung F nachgeschaltet ist, kann den ersten Gasableitern 4, die den Datenleitungen parallelgeschaltet sind, auch eine gemeinsame Sicherung F nachgeschaltet sein, die an ihrem gegenüberliegenden Ende mit der Erdung E verbunden ist.

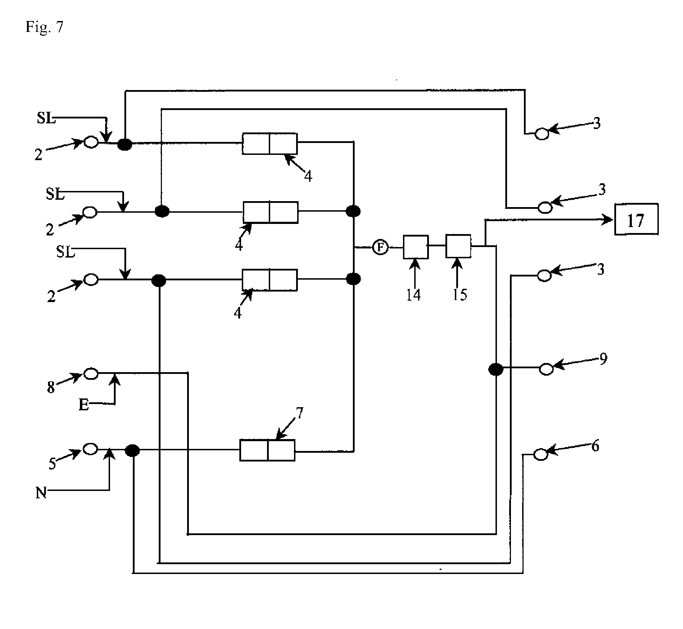

Die Fig. 7 zeigt eine bevorzugte Ausführungsform einer Vorrichtung zum Nachweis von Überspannung mit drei spannungsführenden Leitern SL und zwei nichtspannungsführenden Leitern NL, von denen einer eine Erdung E und der andere ein Nullleiter N ist, wobei den spannungsführenden Leitern SL und dem Nullleiter N jeweils ein Gasableiter 4, 7 parallelgeschaltet ist. Die ersten Gasableiter 4 und der zweite Gasableiter 7 sind an ihren Ausgängen jeweils mit einer Sicherung F verbunden, die wiederum an ihrem den Gasableitern gegenüberliegenden Ende mit einer Einrichtung zur Datenübermittlung 14 verbunden ist. Die Einrichtung zur Datenübermittlung 14 ist mit einer Einrichtung zur Positionsbestimmung 15 verbunden. Die Einrichtung zur Datenübermittlung 14 und die Einrichtung zur Positionsbestimmung 15 sind eingerichtet, bei Detektieren eines Spannungsimpulses ein Signal an einen Empfänger 17 zu senden, wobei das von der Einrichtung zur Datenübermittlung 14 gesendete Signal ein Identifikationsmerkmal der Vorrichtung, beispielsweise eine Seriennummer, beinhaltet, und das von der Einrichtung zur Positionsbestimmung 15 gesendete Signal Informationen zum Standort der Vorrichtung zum Zeitpunkt der Detektion von Spannung enthält. Für das Senden der Signale weisen die Einrichtung zur Datenübermittlung 14 und die Einrichtung zur Positionsbestimmung 15 jeweils einen Sender auf. Weiterhin weist die Einrichtung zur Positionsbestimmung 15 für die Bestimmung des Standorts der Vorrichtung und des Zeitpunkts des Detektierens von Spannung einen Standortanzeiger, beispielsweise einen GPS-Empfänger oder einen Galileo-Empfänger auf. Vorzugsweise weisen die Einrichtung zur Datenübermittlung 14 und die Einrichtung zur Positionsbestimmung 15 jeweils eine Energieversorgung auf.

### Bezugszeichenliste

- 1: Gehäuse
- 2: Eingang des spannungsführenden Leiters
- 3: Ausgang des spannungsführenden Leiters
- 4: erster Gasableiter
- 5: Eingang des Nullleiters
- 6: Ausgang des Nullleiters
- 7: zweiter Gasableiter
- 8: Eingang der Erdung
- 9: Ausgang der Erdung
- 14: Einrichtung zur Datenübermittlung
- 15: Einrichtung zur Positionsbestimmung
- 16: computergestützte Datenbank
- 17: Empfänger
- 18: Kontakt
- 19: Eingang einer Datenleitung
- 20: Ausgang einer Datenleitung
- SL: spannungsführender Leiter
- NL: nichtspannungsführender Leiter
- E: Erdung
- N: Nullleiter
- F: Sicherung

## Patentansprüche

1. Vorrichtung zum Nachweis von Überspannung zur Anordnung in einer elektrischen Leitung mit
- zumindest einem spannungsführenden Leiter (SL), der an seinem ersten Ende einen Eingang (2) und an seinem zweiten Ende einen Ausgang (3) aufweist, wobei der spannungsführende Leiter (SL) mit einem ersten Spannungsindikator verbunden ist und
- zumindest einem nichtspannungsführenden Leiter (NL), der an seinem ersten Ende einen Eingang (5) und an seinem zweiten Ende einen Ausgang (6) aufweist, wobei der zumindest eine spannungsführende Leiter (SL) und der zumindest eine nichtspannungsführende Leiter (NL) innerhalb eines Gehäuses (1) angeordnet sind und die Eingänge und die Ausgänge der Leiter (SL, NL) die einzigen Öffnungen des Gehäuses (1) überdecken,
**dadurch gekennzeichnet, dass** der erste Spannungsindikator ein erster Gasableiter (4) mit nachgeschalteter Sicherung (F) ist und parallel zu dem spannungsführenden Leiter (SL) geschaltet ist und der Ausgang des ersten Spannungsindikators mit dem nichtspannungsführenden Leiter (NL) verbunden ist, wobei der erste Spannungsindikator eingerichtet ist, nur oberhalb einer vorbestimmten Grenzspannung einer irreversiblen Änderung zu unterliegen.

2. Vorrichtung nach Anspruch 1, **dadurch gekennzeichnet, dass** die Eingänge und die Ausgänge der Leiter (SL, NL) von Kontakten (18) gebildet sind.

3. Vorrichtung nach Anspruch 1 oder 2, **dadurch gekennzeichnet, dass** der nichtspannungsführende Leiter (NL) ein Nullleiter (N) ist, der mit einem zweiten Spannungsindikator verbunden ist, der ein zweiter Gasableiter (7) mit nachgeschalteter Sicherung (F) ist und parallel zum nichtspannungsführenden Leiter (NL) geschaltet ist, wobei der zweite Spannungsindikator eingerichtet ist, nur oberhalb einer vorbestimmten Grenzspannung einer irreversiblen Änderung zu unterliegen.

4. Vorrichtung nach Anspruch 3, **dadurch gekennzeichnet, dass** der Ausgang des zweiten Spannungsindikators mit dem spannungsführenden Leiter (SL) verbunden ist.

5. Vorrichtung nach Anspruch 1, **dadurch gekennzeichnet, dass** der nichtspannungsführende Leiter (NL) eine Erdung (E) ist.

6. Vorrichtung nach einem der voranstehenden Ansprüche, **gekennzeichnet durch** zwei nichtspannungsführende Leiter (NL), von denen einer ein Nullleiter (N) und der andere eine Erdung (E) ist, wobei der Nullleiter (N) mit einem zweiten Spannungsindikator verbunden ist, der ein zweiter Gasableiter (7) mit nachgeschalteter Sicherung (F) ist und parallel zum Nullleiter (N) geschaltet ist, und wobei der zweite Spannungsindikator eingerichtet ist, nur oberhalb einer vorbestimmten Grenzspannung einer irreversiblen Änderung zu unterliegen.

7. Vorrichtung nach Anspruch 6, **dadurch gekennzeichnet, dass** der Ausgang des ersten und des zweiten Spannungsindikators mit der Erdung (E) verbunden sind.

8. Vorrichtung nach einem der voranstehenden Ansprüche, **dadurch gekennzeichnet, dass** jedem Gasableiter (4, 7) eine separate Sicherung (F) nachgeschaltet ist, die mit dem Ausgang (9) der Erdung (E) verbunden ist und eingerichtet ist, bei Kontakt mit Spannung zu unterbrechen.

9. Vorrichtung nach einem der voranstehenden Ansprüche, **dadurch gekennzeichnet, dass** allen ersten Gasableitern (4) eine gemeinsame Sicherung (F) nachgeschaltet ist, die mit dem Ausgang (9) der Erdung (E) verbunden ist und eingerichtet ist, bei Kontakt mit Spannung zu unterbrechen.

10. Vorrichtung nach einem der voranstehenden Ansprüche, **dadurch gekennzeichnet, dass** die Grenzspannung 650 V beträgt.

11. Vorrichtung nach einem der voranstehenden Ansprüche, **gekennzeichnet durch** eine Einrichtung zur Datenübermittlung (14) mit einem Sender und einem Speicher, die zumindest einem der Spannungsindikatoren nachgeschaltet ist und eingerichtet ist, bei Detektion einer Spannung Identifikationsmerkmale aus dem Speicher abzurufen und mittels eines Senders ein erstes Signal an einen Empfänger (17) zu übermitteln.

12. Vorrichtung nach einem der voranstehenden Ansprüche, **gekennzeichnet durch** eine Einrichtung zur Positionsbestimmung (15) mit einem Standortanzeiger und einem Sender, die zumindest einem der Spannungsindikatoren nachgeschaltet ist und eingerichtet ist, bei Detektion einer Spannung mittels des Senders ein zweites Signal an einen Empfänger (17) zu übermitteln, wobei das Signal Informationen zum Standort der Vorrichtung zum Zeitpunkt der Detektion von Spannung enthält.

13. Vorrichtung nach einem der voranstehenden Ansprüche, **dadurch gekennzeichnet, dass** das Gehäuse (1) passend zu einer Verteilerdose, zu einem Telefonanschluss oder zu einem Antennenanschluss geformt ist, wobei die Eingänge der spannungsführenden und nichtspannungsführen Leiter (SL, NL) passend zu den Kontakten der Verteilerdose, des Telefonanschlusses oder des Antennenanschlusses angeordnet sind, und wobei die Ausgänge der spannungsführenden und nichtspannungsführen Leiter (SL, NL) wie die Kontakte der Verteilerdose, des Telefonanschlusses oder des Antennenanschlusses angeordnet sind.

14. System mit einer Vorrichtung nach einem der Ansprüche 12 bis 14, **gekennzeichnet durch** eine computergestützte Datenbank (16), die eingerichtet ist, die von der Einrichtung zur Datenübermittlung (14) gesendeten Identifikationsmerkmale in der computergestützten Datenbank (16) gespeicherten Daten zuzuordnen.

15. Verfahren zum Nachweis einer Überspannung mit den Schritten
- Bereitstellen einer Vorrichtung nach einem der voranstehenden Ansprüche,
- Durchtretenlassen von Spannung durch den spannungsführenden Leiter (SL) und/oder durch den nichtspannungsführenden Leiter (NL),
wobei nur bei Überschreiten der Grenzspannung in einem Leiter (SL, NL) der dazu parallelgeschaltete Spannungsindikator irreversibel verändert wird,
- Bestimmen der irreversibel veränderbaren Eigenschaft des zumindest einen Spannungsindikators,
- Feststellen des Vorliegens oder des Fehlens einer irreversiblen Veränderung zumindest eines Spannungsindikators.

16. Verfahren nach Anspruch 15, **gekennzeichnet durch** einen Schritt der Bewertung der Feststellung dahingehend, dass das Fehlen einer irreversiblen Veränderung der Eigenschaft zumindest eines Spannungsindikators als Nachweis dafür gewertet wird, dass keine Spannung oberhalb der Grenzspannung **durch** den Spannungsindikator getreten ist, während das Vorliegen einer irreversiblen Veränderung als Nachweis für einen Durchtritt von Spannung oberhalb der Grenzspannung **durch** den Spannungsindikator und für das Anliegen einer Spannung oberhalb der vorbestimmten Grenzspannung in dem mit diesem Spannungsindikator parallelgeschalteten Leiter gewertet wird.

17. Verfahren nach einem der Ansprüche 15 bis 16, **gekennzeichnet durch**
- das Feststellen der Funktionsfähigkeit eines Gerätes, das an dem Ausgang eines Leiters (SL, NL) angeordnet war, und
- die Bestimmung zumindest einer veränderbaren Eigenschaft des Spannungsindikators, der mit diesem Leiter (SL, NL) verbunden war,
wobei eine Abweichung der zumindest einen Eigenschaft des mit dem Leiter (SL, NL) verbundenen Spannungsindikators von einer Eigenschaft eines Spannungsindikators, **durch** den keine Spannung hindurchgetreten ist, nur in Kombination mit dem Defekt des Gerätes als Nachweis dafür bewertet wird, dass eine oberhalb der Grenzspannung liegende Spannung **durch** den Leiter (SL, NL) hindurchgetreten ist und an dessen Ausgang in das Gerät eingetreten ist.

18. Verfahren nach einem der Ansprüche 15 bis 17, **gekennzeichnet durch**
- das Eintretenlassen von Spannung in eine zumindest einem Spannungsindikator nachgeschaltete Einrichtung zur Datenübermittlung (14), und
- das Abrufen von Identifikationsmerkmalen aus einem Speicher der Einrichtung zur Datenübermittlung (14), und
- das Senden eines Signals **durch** einen Sender der Einrichtung zur Datenübermittlung (14) an einen Empfänger (17),
wobei das Senden des Signals infolge der Detektion eines Spannungsimpulses **durch** die Einrichtung zur Datenübermittlung (14) erfolgt und das Signal Identifikationsmerkmale der Vorrichtung enthält.

19. Verfahren nach einem der Ansprüche 15 bis 18, **gekennzeichnet durch**
- das Eintretenlassen von Spannung in eine zumindest einem Spannungsindikator nachgeschaltete Einrichtung zur Positionsbestimmung (15), und
- das Bestimmen des Standorts der Vorrichtung zum Zeitpunkt der Detektion von Spannung **durch** einen Standortanzeiger,
- das Senden eines Signals **durch** einen Sender der Einrichtung zur Positionsbestimmung (14) an einen Empfänger (17),
wobei das Senden des Signals infolge der Detektion eines Spannungsimpulses **durch** die Einrichtung zur Positionsbestimmung (14) erfolgt und das Signal Informationen zum Standort der Vorrichtung zum Zeitpunkt der Detektion eines Spannungsimpulses enthält.
